# EUROPÄISCHE PATENTANMELDUNG

(11) **EP 2 806 202 A1**
(43) Veröffentlichungstag der Anmeldung: **26.11.2014**
(21) Anmeldenummer: 14162604.4
(22) Anmeldetag: 31.03.2014
(51) Int. Cl.: F16M 11/16, F16M 11/34

(54) **Stativ**

(30) Priorität: 17.04.2013 DE 202013003662 U
(71) Anmelder: CULLMANN GERMANY GmbH, 90579 Langenzenn (DE)
(72) Erfinder:
(74) Vertreter: Louis Pöhlau Lohrentz

(57) **Zusammenfassung**

Die Erfindung betrifft ein Stativ (1) für ein optisches Gerät mit Stativbeinen (11), die an jeweils zugeordneten Sternarmen (12a) eines Stativsterns (12) schwenkbar angeordnet sind, und einer Sperreinrichtung (16) für jedes der Stativbeine (11), wobei die Sperreinrichtung (16) eine Offenstellung aufweist, in der das Stativbein (11) an dem Sternarm (12a) schwenkbar ist, und eine Sperrstellung aufweist, in der das Stativbein (11) an dem Sternarm (12a) gegen eine Schwenkbewegung festgestellt ist.

Wesentlich bei dem Gegenstand ist, dass die Sperreinrichtung (16) mit einer in Längsrichtung des Stativbeins (11) verschiebbaren Sperrbuchse (16s) von einer Sperrstellung in eine Offenstellung und umgekehrt, d. h. von der Offenstellung in die Sperrstellung bringbar ist, wobei die Sperrbuchse (16s) in der Sperrstellung in sperrendem Eingriff mit dem zugeordneten Sternarm ist und in der Offenstellung außer sperrendem Eingriff mit dem zugeordneten Sternarm ist.

## Beschreibung

Die Erfindung betrifft ein Stativ für optische Geräte mit ausspreizbaren Stativbeinen nach dem Oberbegriff des Anspruchs 1.

Derartige Stative sind üblicherweise mit drei Stativbeinen ausgebildet, die zwischen einer Ruheposition und einer Gebrauchsposition verschwenkbar sind. In der Ruheposition nehmen die Stativbeine eine zueinander parallele Stellung ein, so dass das Stativ in der Ruheposition einen geringen Platzbedarf besitzt.

Um die Stativbeine in der Gebrauchsposition zu fixieren, können schwergängige Lager für die Stativbeine vorgesehen sein. Während der Gebrauchsdauer des Stativs können solche Lager durch Abnutzung leichtgängig werden, so dass der sichere Stand des Stativs nicht mehr gewährleistet ist.

Deshalb haben sich Stative mit Fixiereinrichtungen für die Stativbeine durchgesetzt, wobei die Stativbeine in diskreten Winkelschritten abspreizbar sind.

Die DE 72 42 098 U beschreibt ein zusammenlegbares Stativ mit einer Rasteinrichtung mit einem verschiebbaren Winkel, der in die Rastausnehmungen eingreift, oder mit einem gefederten Schalthebel, der in Richtung auf das Stativbein drückbar ist. Dadurch ist ein unbeabsichtigtes Lösen der Rast bei Gebrauch des Stativs möglich.

Die DE 196 36 413 C1 beschreibt eine Vorrichtung zur Einstellung der Beinspreizung eines Holzstativs, wobei die Fixiereinrichtung eine mit einem Anschlagelement zusammenwirkende Kugelrasteinrichtung aufweist.

Aufgabe der vorliegenden Erfindung ist es, ein Stativ mit einer Fixiereinrichtung für die Stativbeine zu schaffen, die sich durch eine sichere Handhabung und einen einfachen Aufbau auszeichnet.

Erfindungsgemäß wird diese Aufgabe mit dem Gegenstand des Anspruchs 1 gelöst. Es wird ein Stativ für ein optisches Gerät vorgeschlagen mit Stativbeinen, die an jeweils zugeordneten Sternarmen eines Stativsterns schwenkbar angeordnet sind, und einer Sperreinrichtung für jedes der Stativbeine, wobei die Sperreinrichtung eine Offenstellung aufweist, in der das Stativbein an dem Sternarm schwenkbar ist, und eine Sperrstellung aufweist, in der das Stativbein an dem Sternarm gegen eine Schwenkbewegung festgestellt ist, wobei vorgesehen ist,
dass die Sperreinrichtung mit einer in Längsrichtung des Stativbeins verschiebbaren Sperrbuchse von einer Sperrstellung in eine Offenstellung und umgekehrt, d. h. von der Offenstellung in die Sperrstellung bringbar ist, wobei die Sperrbuchse in der Sperrstellung in Eingriff mit dem zugeordneten Sternarm ist und in der Offenstellung außer Eingriff mit dem zugeordneten Sternarms ist.

Durch das Vorsehen einer längsverschieblichen Sperrbuchse ist das Stativ ergonomisch bedienbar und weist eine hohe Funktionssicherheit auf. Die Sperrstellung des Stativbeins kann nicht versehentlich aufgehoben werden.

Es kann vorgesehen sein, dass die Sperrbuchse mit dem zugeordneten Sternarm verrastbar ist.

Die Sperrbuchse kann mit einer Rastnase ausgebildet sein, die in mindestens eine an der Unterseite des Sternarms ausgebildete Rastausnehmung eingreifbar ausgebildet ist.

Es kann vorgesehen sein, dass jeder Sternarm an seinem freien Ende ein Schwenklager aufweist, in dem das zugeordnete Stativbein schwenkbar gelagert ist, und dass die Sperrbuchse in dem Sternarm in einem Bereich nahe dem Schwenklager in der Sperrstellung eingreift.

Bei bevorzugten Ausführungen kann von Vorteil vorgesehen sein, dass mehrere einer Sperrbuchse zugeordnete Rastausnehmungen in dem jeweiligen Sternarm auf einem Kreisbogen angeordnet sind, dessen Mittelpunkt auf der Schwenkachse des zugeordneten Schwenklagers liegt. Es können die Rastausnehmungen z. B. vorzugsweise in gleichen Winkelabständen versetzt zueinander angeordnet sein, z. B. in Winkelpositionen von 21°, 42° und 63°. Es kann vorgesehen sein, dass der Sternarm eine erste der zentralen Achse des Stativsterns benachbarte Rastausnehmung und mindestens eine weitere der zentralen Achse des Stativsterns weiter entfernte zweite Rastausnehmung aufweist, wobei die erste Rastausnehmung eine größere Tiefe aufweist als die mindestens eine weitere zweite Rastausnehmung. Auf diese Weise kann die Transportstellung des Stativs, bei der die Stativbeine parallel zueinander angeordnet sind, ohne Pröbeln eingestellt werden. Es kann dadurch möglich sein, die Stativbeine durch einfache Schwenkbewegung aus der ersten Raststellung in die Transportstellung zu stellen. Dies kann insbesondere erfolgen, wenn die Rastnase in die erste Rastausnehmung nicht mehrseitig formschlüssig umschlossen eingreift, sondern z. B. nur an einer Seite der Rastnase in Anschlag steht.

Es können vorzugsweise neben der ersten Rastausnehmung zwei oder mehr weitere Rastausnehmungen vorgesehen sein. Die verschiedenen Rastausnehmungen bestimmen die Winkelstellungen, in die das zugeordnete Stativbein einstellbar ist.

Es kann vorgesehen sein, dass die Rastausnehmungen symmetrisch ausgebildet sind mit zwei Flanken, die einen Winkel einschließen.

Der zwischen den Flanken ausgebildete Winkel kann bei bevorzugten Ausführungen im Bereich von kleiner gleich 90° liegen. Bei größerem Winkel kann sich unter Umständen eine zu geringe Selbsthemmung ergeben.

Benachbarte Rastausnehmungen können unmittelbar aneinander grenzend angeordnet sein.

Die Sperrbuchse kann topfförmig ausgebildet sein und ein zylinderförmiges Kopfstück des Stativbeins umgreifen, wobei der Boden der Sperrbuchse zu dem Sternarm weist.

Der Boden der Sperrbuchse kann an seiner Außenseite die Rastnase aufweisen.

Es kann vorgesehen sein, dass zwischen dem Boden der Sperrbuchse und dem zylinderförmigen Kopfstück des Stativbeins eine Rückstellfeder angeordnet ist.

Der Boden der Sperrbuchse kann mit einem zentrischen Führungsbolzen starr verbunden sein, der in den Innenraum der Sperrbuchse ragt.

Der Führungsbolzen kann in einem axialen Durchgangsloch des Kopfstücks des Stativbeins geführt sein.

Weiter kann vorgesehen sein, dass die in einer ringförmigen Ausnehmung des Kopfstücks angeordnete Rückstellfeder den oberen Endabschnitt des Führungsbolzens umgreift.

Die Rückstellfeder kann als eine Schraubendruckfeder ausgebildet sein.

Die Erfindung wird nun anhand von Ausführungsbeispielen näher erläutert. Es zeigen
- Fig. 1: ein Ausführungsbeispiel des erfindungsgemäßen Stativs in perspektivischer Darstellung in der Transportposition;
- Fig. 2: das Stativ in Fig. 1 in einer Arbeitsposition;
- Fig. 3: das Stativ in Fig. 1 in einer Schnittansicht;
- Fig. 4: das Stativ in Fig. 3 mit einem ausgeschwenkten Bein;
- Fig. 5: das Stativ in Fig. 4 mit einem ausgeschwenkten fixierten Bein.

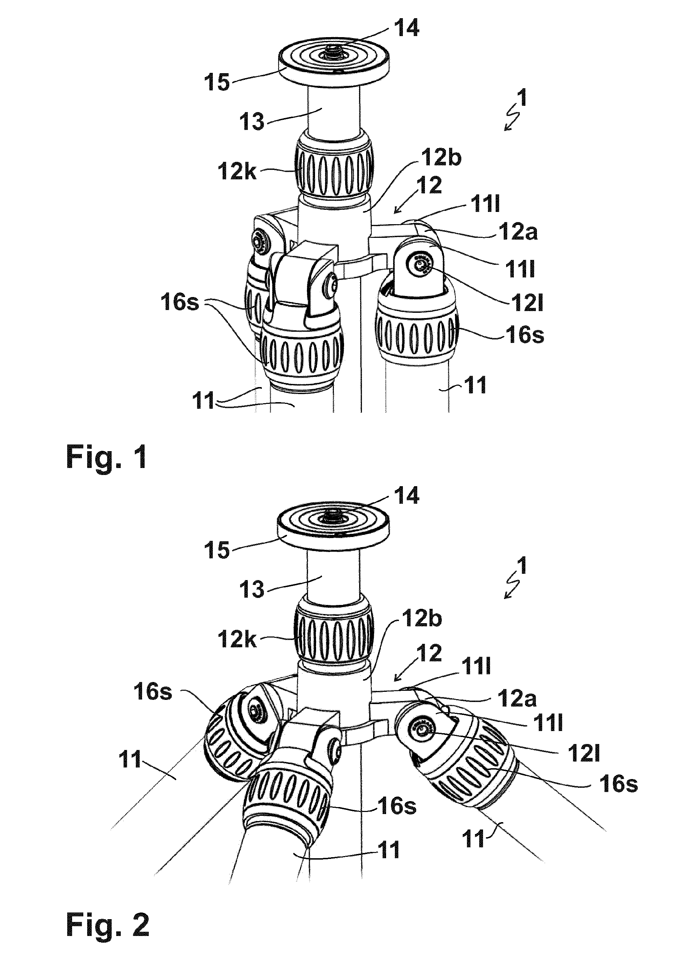

Fig. 1 zeigt ein Stativ 1 für ein optisches Gerät, wie beispielsweise eine Photo-, Video- oder Filmkamera, mit drei teleskopförmigen Stativbeinen 11. Die Stativbeine 11 sind an einem dreiarmigen Stativstern 12 schwenkbar angeordnet, von dem ein rohrförmiger Befestigungs- und Führungsabschnitt 12b senkrecht absteht. Der Befestigungs- und Führungsabschnitt 12b ist von einer Mittelsäule 13 durchgriffen, die in dem Befestigungs- und Führungsabschnitt 12b bewegbar angeordnet ist. Die Mittelsäule 13 ist in dem Befestigungs- und Führungsabschnitt 12b mittels einer Klemmeinrichtung klemmbar, die durch einen hülsenförmigen Klemmgriff 12k betätigbar ist. Die Klemmeinrichtung ist durch Drehung des Klemmgriffs 12k um seine Längsachse von einer Freigabestellung in eine Klemmstellung bringbar und umgekehrt.

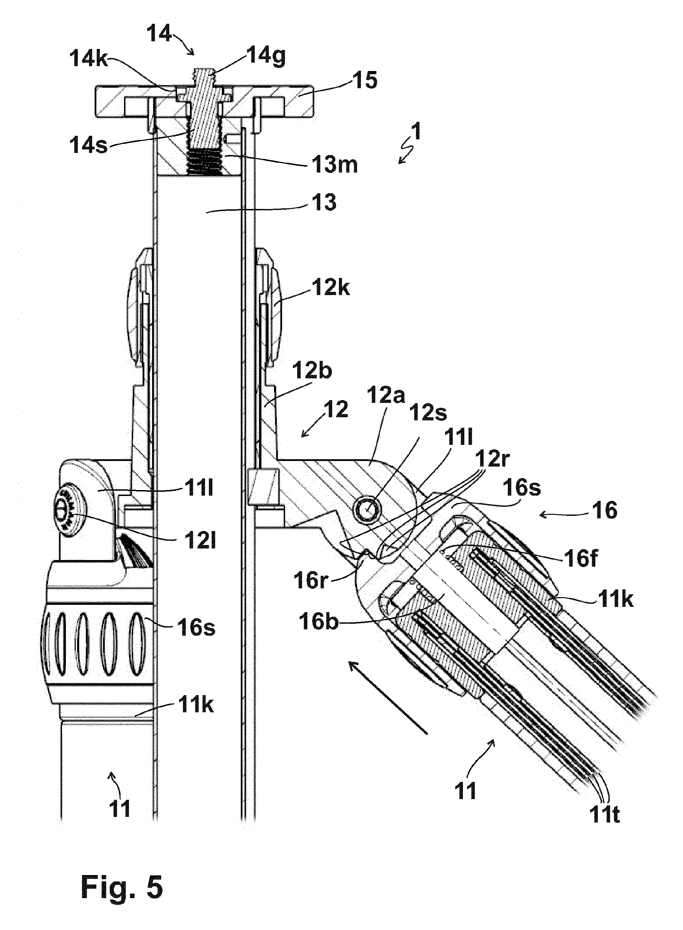

An dem oberen Endabschnitt der Mittelsäule 13 ist eine Stativmutter 13m verdrehsicher angeordnet. In die Stativmutter greift eine Stativschraube 14 ein. In dem in den Fig. 1 bis 5 dargestellten Ausführungsbeispiel weist die stiftförmige Stativschraube 14 einen stativseitigen Gewindeabschnitt 14s und einen geräteseitigen Gewindeabschnitt 14g auf, zwischen denen einen ringförmig hervorspringender Klemmabschnitt 14k angeordnet ist. Der stativseitige Gewindeabschnitt 14s ist mit dem Gewinde der Stativmutter 13m ausgebildet, beispielsweise mit einem 3/8" UNC Gewinde oder Gewinde nach DIN 4503. Der geräteseitige Gewindeabschnitt 14g ist mit einem Kameragewinde ausgebildet, beispielsweise mit einem 1/4-Zoll-20-Gang-Whitworth-Gewinde. Die Stativschraube 14 durchgreift eine Klemmplatte 15 zur Aufnahme des optischen Gerätes und klemmt diese über den Klemmabschnitt 14k auf der Stirnfläche der Stativmutter 13m.

Der Stativstern 12 weist drei im Winkel von 120° angeordnete Sternarme 12a auf, die plattenförmig mit einem abgerundeten Endabschnitt ausgebildet sind, der von einem Lagerbolzen 12l für ein Stativbein 11 durchgriffen ist. Die Stativbeine 11 weisen einen U-förmigen Lagerabschnitt mit Lagerarmen 11l auf, zwischen denen der Sternarm 12a angeordnet ist. Der Lagerbolzen 12l ist in dem in Fig. 1 bis 5 dargestellten Ausführungsbeispiel als eine Schaftschraube ausgebildet, die in einen der Lagerarme 11l eingeschraubt ist. Die Lagerarme 11l stehen von einem zylinderförmigen Kopfstück 11k des Stativbeins 11 ab, das eine Aufnahme für Teleskoprohre 11t bildet. Durch Ausziehen der Teleskoprohre 11t ist die Länge des Stativbeins 11 einstellbar.

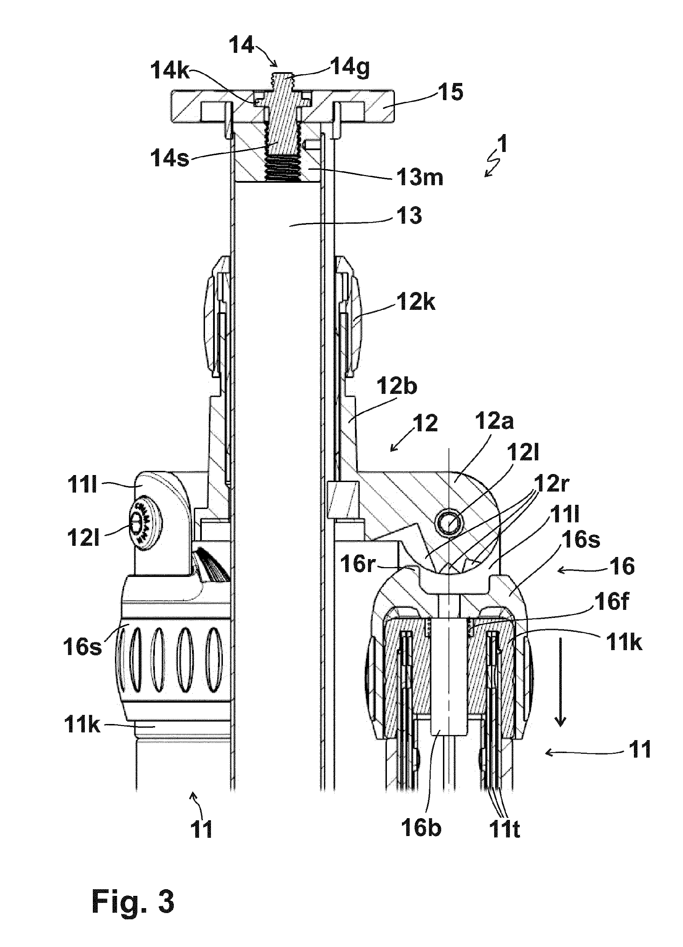

Wie Fig. 3 zeigt, ist das Stativbein 11 durch eine Sperreinrichtung 16 in diskreten Winkelstellungen an dem Stativstern 12 feststellbar. Die Sperreinrichtung 16 umfasst an dem Sternarm 12a ausgebildete Rastausnehmungen 12r, eine topfförmige Sperrbuchse 16s mit einer Rastnase 16r sowie eine Rückstellfeder 16f. Die Sperrbuchse 16s umgreift das Kopfstück 11k des Stativbeins 11, so dass der Boden der Sperrbuchse 16s zu dem Sternarm 12a weist. Der Boden der Sperrbuchse 16s ist mit einem zentrischen Führungsbolzen 16b starr verbunden, der in den Innenraum der Sperrbuchse 16s ragt. Der Führungsbolzen 16b ist in einem axialen Durchgangsloch des Kopfstücks 11k geführt. Die Rastnase 16r ragt aus der Stirnseite, das heißt dem Bodenabschnitt der topfförmigen Sperrbuchse 16s hervor. Die in einer ringförmigen Ausnehmung des Kopfstücks 11 k angeordnete Rückstellfeder 16f ist als eine Schraubendruckfeder ausgebildet und umgreift den oberen Endabschnitt des Führungsbolzens 16b. Die Rückstellfeder 16f ist an der Innenseite des Bodenabschnitts der Sperrbuchse 16s und dem Kopfstück 11k abgestützt und drückt die Sperrbuchse 16s gegen den Sternarm 12a, so dass die Rastnase 16r beim Schwenken des Stativbeins 11 in die in Schwenkrichtung nächste Rastausnehmung 12r einfallen kann.

Die Rastausnehmungen 12r sind auf einem Kreisbogen angeordnet, dessen Mittelpunkt auf der Längsachse des Lagerbolzens 12l liegt. In dem in Fig. 3 dargestellten Ausführungsbeispiel sind drei Rastausnehmungen 12r vorgesehen, die unmittelbar aufeinander folgen. Die Rastausnehmungen 12r sind symmetrisch ausgebildet mit zwei Flanken, die in dem in Fig. 3 dargestellten Ausführungsbeispiel einen Winkel von 90° einschließen. Die beiden außen liegenden Rastausnehmungen 12r weisen eine geringere Tiefe auf als die innen liegende Rastausnehmung 12r, die für die Fixierung des Stativbeins 11 in einer Transportlage vorgesehen ist, das heißt parallel zur Mittelsäule 13 liegend.

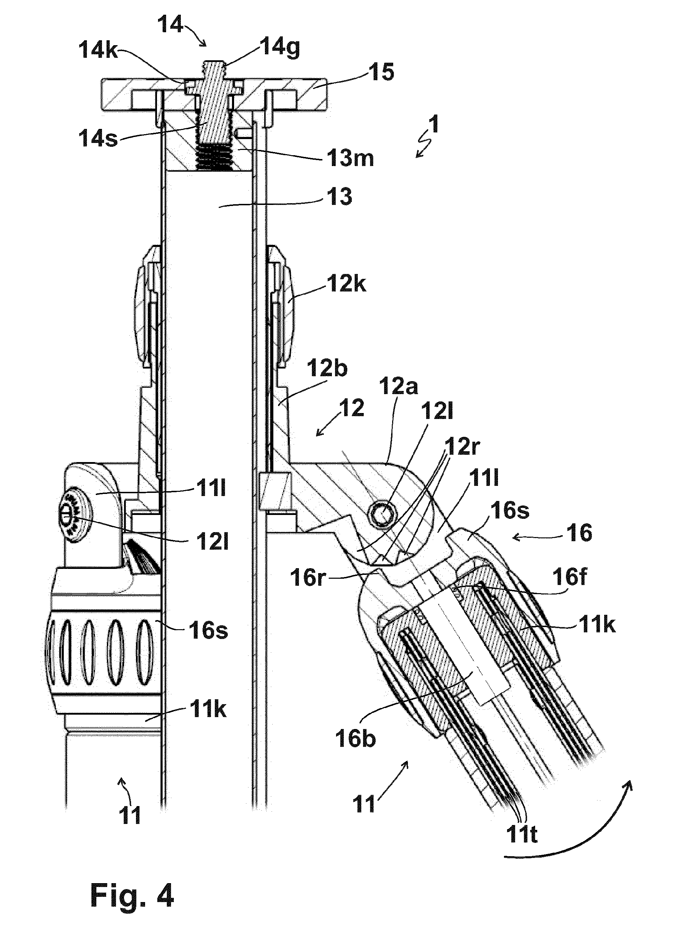

Durch axiales Verschieben der Sperrbuchse 16s nach unten, das heißt in Richtung zum Fuß des Stativbeins 11, wird die Sperreinrichtung 16 in eine Offenstellung gebracht, in der das Stativbeins 11 schwenkbar ist, wie in Fig. 3 und 4 dargestellt. Durch Loslassen der Sperrbuchse 16s ist die Sperreinrichtung 16 in eine Sperrstellung bringbar, in der die Rastnase 16r einer Rastausnehmung 12r gegenübersteht und in die Rastausnehmung 12r einfällt.

### Bezugszeichenliste

- 1: Stativ
- 11: Stativbein
- 11l: Lagerarm
- 11k: Kopfstück
- 11t: Teleskoprohre
- 12: Stativstern
- 12a: Sternarm
- 12b: Befestigungs- und Führungsabschnitt
- 12k: Klemmgriff
- 12l: Lagerbolzen
- 12r: Rastausnehmung
- 13: Mittelsäule
- 13m: Stativmutter
- 14: Stativschraube
- 14g: geräteseitiger Gewindeabschnitt
- 14k: Klemmabschnitt
- 14s: stativseitiger Gewindeabschnitt
- 15: Klemmplatte
- 16: Sperreinrichtung
- 16b: Führungsbolzen
- 16f: Rückstellfeder
- 16r: Rastnase
- 16s: Sperrbuchse

## Patentansprüche

1. Stativ (1) für ein optisches Gerät mit Stativbeinen (11), die an jeweils zugeordneten Sternarmen (12a) eines Stativsterns (12) schwenkbar angeordnet sind, und einer Sperreinrichtung (16) für jedes der Stativbeine (11), wobei die Sperreinrichtung (16) eine Offenstellung aufweist, in der das Stativbein (11) an dem Sternarm (12a) schwenkbar ist, und eine Sperrstellung aufweist, in der das Stativbein (11) an dem Sternarm (12a) gegen eine Schwenkbewegung festgestellt ist,
**dadurch gekennzeichnet,**
**dass** die Sperreinrichtung (16) mit einer in Längsrichtung des Stativbeins (11) verschiebbaren Sperrbuchse (16s) von einer Sperrstellung in eine Offenstellung und umgekehrt, d. h. von der Offenstellung in die Sperrstellung bringbar ist, wobei die Sperrbuchse (16s) in der Sperrstellung in sperrendem Eingriff mit dem zugeordneten Sternarm ist und in der Offenstellung außer sperrendem Eingriff mit dem zugeordneten Sternarm ist.

2. Stativ nach Anspruch 1,
**dadurch gekennzeichnet,**
**dass** die Sperrbuchse (16s) mit dem zugeordneten Sternarm (12a) verrastbar ist.

3. Stativ nach Anspruch 2,
**dadurch gekennzeichnet,**
**dass** die Sperrbuchse (16s) mit einer Rastnase (16r) ausgebildet ist, die in mindestens eine an der Unterseite des Sternarms (12a) ausgebildete Rastausnehmung (12r) eingreifbar ausgebildet ist.

4. Stativ nach einem der vorangehenden Ansprüche,
**dadurch gekennzeichnet,**
**dass** jeder Sternarm (12a) an seinem freien Ende ein Schwenklager (12l) aufweist, in dem das zugeordnete Stativbein (11) schwenkbar gelagert ist, und
**dass** die Sperrbuchse (16s) in dem Sternarm (12a) in einem Bereich nahe dem Schwenklager in der Sperrstellung eingreift.

5. Stativ nach Anspruch 2 oder 4,
**dadurch gekennzeichnet,**
**dass** an dem Sternarm (12a) mehrere einer Sperrbuchse (16s) zugeordnete Rastausnehmungen (12r) auf einem Kreisbogen angeordnet sind, dessen Mittelpunkt auf der Schwenkachse des zugeordneten Schwenklagers (12l) liegt.

6. Stativ nach einem der Ansprüche 3 bis 5,
**dadurch gekennzeichnet,**
**dass** der Sternarm (12a) eine erste der zentralen Achse des Stativsterns benachbarte Rastausnehmung (12r) und mindestens eine weitere der zentralen Achse des Stativsterns weiter entfernte zweite Rastausnehmung (12r) aufweist, wobei die erste Rastausnehmung (12r) eine größere Tiefe aufweist als die mindestens eine weitere zweite Rastausnehmung (12r).

7. Stativ nach Anspruch 6,
**dadurch gekennzeichnet,**
**dass** neben der ersten Rastausnehmung zwei oder mehr weitere Rastausnehmungen (12r) vorgesehen sind.

8. Stativ nach einem der Ansprüche 3 bis 7,
**dadurch gekennzeichnet,**
**dass** die Rastausnehmungen (12r) symmetrisch ausgebildet sind mit zwei Flanken, die einen Winkel einschließen.

9. Stativ nach Anspruch 8,
**dadurch gekennzeichnet,**
**dass** der zwischen den Flanken ausgebildete Winkel im Bereich von kleiner gleich 90° ist.

10. Stativ nach einem der Ansprüche 3 bis 9,
**dadurch gekennzeichnet,**
**dass** benachbarte Rastausnehmungen (12r) unmittelbar aneinander grenzend angeordnet sind.

11. Stativ nach einem der vorangehenden Ansprüche,
**dadurch gekennzeichnet,**
**dass** die Sperrbuchse (16s) topfförmig ausgebildet ist und ein zylinderförmiges Kopfstück (11k) des Stativbeins (11) umgreift, wobei der Boden der Sperrbuchse (16s) zu dem Sternarm (12a) weist.

12. Stativ nach Anspruch 11,
**dadurch gekennzeichnet,**
**dass** der Boden der Sperrbuchse (16s) an seiner Außenseite die Rastnase (16r) aufweist.

13. Stativ nach Anspruch 11 oder 12,
**dadurch gekennzeichnet,**
**dass** zwischen dem Boden der Sperrbuchse (16s) und dem zylinderförmigen Kopfstück (11k) des Stativbeins (11) eine Rückstellfeder (16f) angeordnet ist.

14. Stativ nach einem der Ansprüche 11 bis 13,
**dadurch gekennzeichnet,**
**dass** der Boden der Sperrbuchse (16s) mit einem zentrischen Führungsbolzen (16b) starr verbunden ist, der in den Innenraum der Sperrbuchse (16s) ragt.

15. Stativ nach Anspruch 14,
**dadurch gekennzeichnet,**
**dass** der Führungsbolzen (16b) in einem axialen Durchgangsloch des Kopfstücks (11k) des Stativbeins (11) geführt ist.
